(19) Europäisches Patentamt
European Patent Office
Office européen des brevets

(11) EP 0 824 108 A1

(12) EUROPEAN PATENT APPLICATION

(43) Date of publication:
18.02.1998 Bulletin 1998/08

(51) Int. Cl.$^6$: **C08B 31/12**, C08L 3/08

(21) Application number: 96202259.6

(22) Date of filing: 12.08.1996

(84) Designated Contracting States:
AT BE CH DE DK ES FI FR GB GR IE IT LI LU MC NL PT SE
Designated Extension States:
AL LT LV SI

(71) Applicant: DSM N.V.
6411 TE Heerlen (NL)

(72) Inventors:
- Nijenhuis, Atze Jan
6132 HB Sittard (NL)
- de Brabander-van den Berg, Ellen Marleen Monique
6438 BE Oirsbeek (NL)
- Scholtens, Boudewijn Jan Robert
6151 JA Munstergeleen (NL)
- Tomka, Ivan, Andras, Peter
8702 Zollikon (CH)
- Li, Zhi
8003 Zürich (CH)

# (54) Thermoplastic polysaccharide and shaped articles moulded thereof

(57) The invention relates to a shaped article consisting essentially of a polysaccharide, obtained by moulding the polysaccharide in the absence of a plasticizing additive, an acetal modified polysaccharide therefor and a novel method for the preparation of the acetal modified polysaccharide.

In the acetal modified polysaccharide part or all hydroxylgroups of the repeating units are substituted by acetalgroups, that do not crosslink and contain at the other oxy group an alkyl, cycloalkyl, aryl or aralkyl group and H, alkyl or cycloalkyl groups at the carbon atom with the oxygroups. The total number of carbon atoms of the substituent acetal groups is at least 5.

In the method of preparation the polysaccharide is reacted in the melt phase, preferably under pressure, with the acetalyzing compound and the volatile compounds present or being formed are removed from the reaction mixture. Preferably a volatile plasticizing additive is used for bringing the polysaccharide in the melt-phase. Uncrosslinked, hydrophobic, thermoplastic modified polysaccharides are obtained that can easily be moulded into shaped articles.

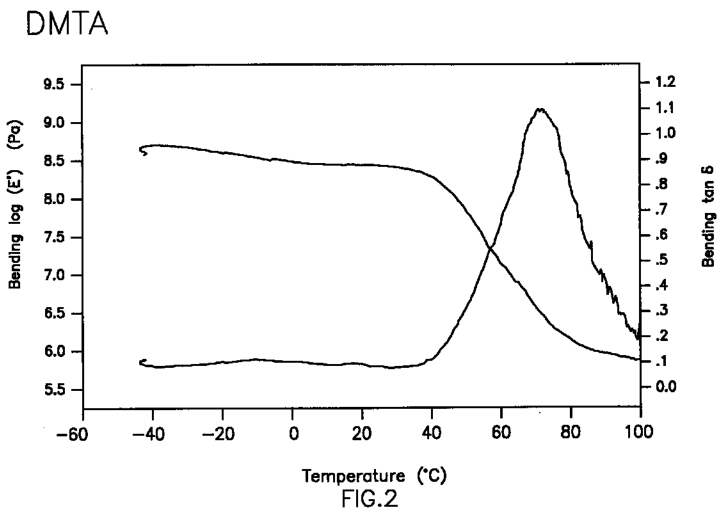


FIG.2



Printed by Xerox (UK) Business Services
2.15.10/3.4

## Description

The invention relates to a shaped article consisting essentially of a polysaccharide, obtained by moulding the polysaccharide. Such shaped articles are known in the art and are for instance disclosed in WO-A-9005161 as well as the production thereof.

According to this state of the art the polysaccharide is made thermoplastic by using a mixture of starch or a starch derivative and at least 5% of an additive that does lower the melting temperature of the starch/additive mixture below the decomposition temperature of the starch. The additive should have a vapor pressure of less than 1 bar at the temperature at which the starch/additive mixture is thermoplastically processed. Additives mentioned are dimethylsulfoxide, 1,3-butanediol, glycerin, ethyleneglycol, propyleneglycol, formamid, N,N-dimethylformamid, N-methylformamid, N,N-dimethylurea, dimethylacetamide and N-methylacetamide. Preferably the starch is partly crosslinked. As crosslinking agents have been mentioned, di-or higher carboxylicacids or an anhydride, halide or acidamid thereof, derivatives of a bis-or higher functional inorganic acid, an epoxide formaldehyde or an urea derivative, a divinylsulfon, an isocyanate, an oxocompound, for instance aceto-formaldehyde or a higher functional oxocompound, and cyanamid.

A problem inherent to the shaped articles of the thermoplastic composition according to this state of the art is, that the additive has to remain in the article or special efforts have to be made to remove it therefrom. Furthermore the article has very hydrophilic properties which limits its applicability.

The object of the invention is therefore to provide a shaped article consisting essentially of polysaccharide that can be obtained by thermoplastic moulding of the polysaccharide without the use of plasticizing additives and that has less hygroscopic properties.

In the present invention the object of the invention is realized by modifying the polysaccharide by substituting hydroxyl groups of the repeating units of the polysaccharide by acetal groups having the formula

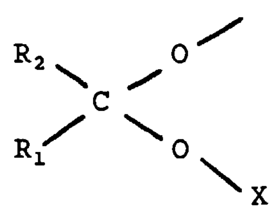

in which

X = alkyl, cycloalkyl, aryl or aralkyl
$R_1$ = H or alkyl
$R_2$ = alkyl
or $R_1$+$R_2$ = cycloalkyl

the total number of carbon atoms in X, $R_1$ and $R_2$ being at least 4 and at most 50. Preferably the total number of carbon atoms in X, $R_1$ and $R_2$ is at least 5 and at most 25.

Due to the absence of any hygroscopic groups in the substituent for instance amine, amide, carboxyl, hydroxyl, sulfo-or sulfoxyde groups, and the shielding effect thereof, the modified polysaccharide shows less hygroscopic properties than the polysaccharides used in thermoplastic compositions for shaped articles according to the state of the art. Preferably X, $R_1$ and $R_2$ are alkyl.

Acetal substituted polysaccharides, especially those of cellulose and starch are described in the prior art. US-A-4,098,997, 4,048,435 and 7,229,420 describe crosslinked starch acetals. These are however not thermoplastic processable. EP-A-314,063, 283,951, 283,824 and 175,113 describe the introduction of acetal functions into polysaccharides via grafting and ester or ether formation. The substituted polysaccharides obtained thereby have a chemical structure very different from the thermoplastic acetal modified polysaccharide of the shaped articles of the present invention. The modified polysaccharides of the above mentioned four disclosures are used for improving the wet strength of paper, no indication is given with respect to thermoplastic properties. US-A-4,508,594 teaches reacting cellulose fibres with polymeric acetals to improve wet strength. M.L. Wolfrom et al, Die Stärke 21, 116-8 (1969) and O. Weaver et al, J. Org. Chem 28, 2838 (1963) describe 1-O-(methoxyethyl) and O-tetrahydro-2H-pyran-2-yl acetals of starch. EP-A-0,474,875 describes a thermoplastic copolymer consisting of functionalized polysaccharide and a polyacetal of repeating oxymethylene units that are bonded to each other by reaction via the functional groups. The polyacetal branches are grafted on the polysaccharide backbone. To prevent crosslinking the terminal group of the polyacetal branches has to be converted into a stable group through esterfication, etherification etc. Because of the formaldehyde

the use of these copolymers should be avoided in most applications.

The shaped articles according to the invention can be moulded at a temperature between about 120 and 260°C.

In the context of this application a polysaccharide is defined thermoplastic, when its glass transition temperature, Tg, or crystalline melting temperature, Tcr, is below its decomposition temperature. In general decomposition of the polysaccharide starts at about 260°C.

At the processing temperature the viscosity of the polysaccharide is such that one may generally speak of a melt. The processing temperature, Tpr, of the thermoplastic polysaccharide according to the invention is in general at least about 40°C higher than the glass transition temperature as determined by the methods known in the art as there are differential scanning calorimetry (DSC), or heat flow calorimetry, the determination of the thermal volume expansion change at constant pressure and the temperature dependance of the mechanical shear relaxation modulus (DMTA). These techniques and their interpretation are described in more detail by F.A. Bovey and F.H. Winslow in Macromolecules, Academic Press 1979, ISBN 0-12 119755-7.

The total number of carbon atoms in X, $R_1$ and $R_2$ should be at least 4, preferably at least 5, to induce sufficient hydrophobicity and to disrupt the crystalline structure of the polysaccharide to such a degree that thermoplasticity is introduced. To this effect the degree of substitution, expressed as the number of hydroxyl groups substituted per repeating unit in the polysaccharide should be at least 0.05, the maximum being 3.0. The degree of substitution, that is necessary to render the polysaccharide thermoplastic, depends on the size of the substituent introduced. The higher the total number of carbon atoms in the substituent, the less is needed.

For cost-price reasons, preference is given to substituents of intermediate size, total number of carbon atoms of between about 5 and 25; for which the degree of substitution is between 0.10 and 2.5.

Depending on the preferred processing temperature and mechanical properties of the shaped article obtained by melt processing the polysaccharide the degree of substitution may further be varied. The higher the degree of substitution the lower the processing temperature and the higher the hydrophobicity.

Due to the chemistry involved the degree of substitution is generally chosen below 2.0. In that case crosslinking and too long reaction times are avoided.

The modified polysaccharide for the shaped articles according to the invention may contain the usual additives for thermoplastics, for instance stabilizers, fillers, reinforcing fibers, colorants, processing aids etc. These additives may be mixed into the modified polysaccharide with the usual methods as there are dryblending, meltmixing or through masterbatch addition, also addition during the modification process is for a number of these additives possible.

The shaped article according to the invention can be obtained through all known methods of moulding of thermoplastic materials. Examples of shaped articles according to the invention are those obtainable by extrusion for instance fibres, films, bags, boxes, profiles, tubes, also all kinds of articles obtainable by injection moulding, hot pressing etc. fall under the shaped articles of the invention.

The modified polysaccharide according to the invention may be obtained by the methods well known in the art and described for instance in the references mentioned before. Examples thereof are:

- Reaction of the polysaccharide with a vinylether having the formula $R_2$-CH=CH-OX in the presence of an acid catalyst, for instance p-toluenesulfonic acid, strong mineral acids or Lewis acids, in a non-volatile solvent, preferably dimethylsulfoxide, DMSO, at slightly elevated temperature, 20°C - 120°C.
- Reaction of the polysaccharide with alkenyl acetals having the formula

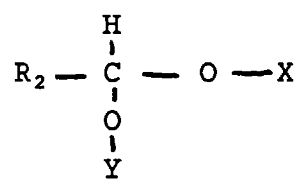

under reaction conditions as give above.
- Reaction of the polysaccharide with alkanon acetals having the formula

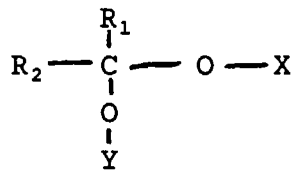

in which

X = alkyl, cycloalkyl, aryl or aralkyl
Y = H or alkyl, having 1-3 C-atoms
$R_1$ = H or alkyl
$R_2$ = alkyl
or $R_1$+$R_2$ = cycloalkyl

the number of carbon atoms in X being higher than in Y.

Preferably the groups X, $R_1$ and $R_2$ are linear or branched aliphatic groups, including alkyl and ether groups. Cyclic groups and unsaturated hydrocarbon groups are less preferred because of their lower internal mobility and lower stability relative to the aliphatic acetals.

However the known processes all have the drawback that solvent should be carefully removed from the polysaccharide acetals obtained therewith. Further the reaction times for obtaining higher degrees of substitution are generally in the order of several hours.

Very surprisingly it has been found by the inventors that if the process of acetalizing is performed in plasticized or molten polysaccharide a very high conversion can be realized within several minutes. The melting of the starting material, first of all, that of the polysaccharide, of which starch is preferred, can be facilitated by additives for instance those mentioned in WO-A-900516. Even more advantageous appears the use of a volatile additive, for instance water or $C_2$-glycol of $C_3$-glycol as plasticizing additive and performing the reaction under pressure.

Preferably high shear is excerted on the reaction mixture. In the case of volatile additives the reaction mixture can be degassed after the reaction has progressed sufficiently to keep the reaction mixture plasticized at the reaction temperature and the reaction is completed thereafter. The acetal modified polysaccharide is obtained by this method free from additive and can be used in many cases without further purification.

In a different mode the reaction mixture is not degassed and at leaving the reactor an expanded polysaccharide is obtained, that at choice can be moulded at the same instance in profiles, sheets, tubes, rods etc. It also is possible by quenching the product leaving the reactor to a temperature below the glass transition temperature to obtain an expandable polysaccharide.

In all production methods it is advantageous to neutralize the acid catalyst upon completion of the reaction. For instance amines, for instance diethylenetriamine, or inorganic bases, for instance sodiumhydroxide or sodiumbicarbonate, can be used for this purpose.

Reaction in the plasticized state can be performed in many apparatus, known as such, for instance in chamber kneaders, (co-rotating) twin screw extruders, Buss cokneader or a static Sulzer mixer equipped with a pumping aggregate. The necessary energy of plastification was in the order of 0.2-0.3 KWh/kg material.

In case of a volatile plasticizing additive preference is given to a closed reactor system with provisions for degassing. An example thereof is an extruder with degassing provisions. In any case it is advantageous if volatile reaction products are removed during the reaction.

The invention will be further described in more detail with the following examples and comparative examples. In experiments 1-9 (comparative examples) the long reaction time at 60°C in solution, DMSO, is demonstrated. The degree of substitution is varied between 0,47 and 2.6. However the small number, 3, of total carbon atoms in X, $R_1$ and $R_2$ prevents the modified starch of rendering thermoplastic. Only at a degree of substitution, D.S., of more than 0.9 the modified starch is water insoluble.

In experiments 10-16, examples 1-7, the bulky substituent made the starch thermoplastic.
In experiments 17-20, examples 8-11, the reaction time could be shortened to several minutes by conducting the reaction in the molten state.

It will be obvious for the person skilled in the art, that these examples are illustrative for the invention and that based thereon a further optimisation both technically and economically is possible. In this respect a continuous process is predictable in which no plasticizing additive, for instance water, is needed. In this process virgin starch is added to the melt

of already thermoplastic modified starch and reacted therein with the acetalizing agent.

Examples

General. Amorphous potato starch with a molecular mass of ca. 13,000,000 was dried over phosphorpentoxide at 80° under vacum (0.1 mbar) for 2 days to a moisture content of 3%. Acetone dimethyl acetal (ADMA) und Butyl vinyl ether (BVE) were purchased from Fluka and used without further purification. Absolute DMSO dried over molecular sieve ($H_2O$ < 0.01%) from Fluka was sufficiently anhydrous for the reaction. P-toluene sulfonic acid (PTSA) was used as catalyst. The reaction was controlled by I.R. spectroscopy and the degree of substitution (D.S.) was determined by I.R., 1H- and 13C-NMR, as well as element analysis.

Experiment 1-9 (comparative Example 1-9): Preparation of 2-methoxy-propanyloxy-2-starch with a D.S. between 0.47 and 2.60 (Table 1)

A mixture of starch and DMSO (10 mg starch/1 ml DMSO) was heated at 120° 1 h. To the cooled solution was then added PTSA (0.0033 M) followed by the addition of ADMA of the required amount. The mixture was stirred at a desired temperature for a desired period. After it was neutralized with diethylenetriamine, (DETA), the mixture was poured into a precipitating solvent. The following precipitating solvents were used: MeOH for D.S. of 0.1 - 0.4, EtOH for D.S. of 0.4 - 0.6, Ethyl acetate for D.S. of 0.6 - 1.0, $H_2O$ for D.S. > 1.0. The precipitate was dialysed for 2 days and dried under reduced pressure at 60° for 2 days.

Table 1

| Comparative Example 1-9 | | | | | |
|---|---|---|---|---|---|
| Experiment | ADMA/Starch | Reaction temperature & time | Degree of Substitution | Yield (based on starch) | Precipitating solvent |
| 1 | 0.6:1 | 60°,3h | 0.47 | 68% | MeOH |
| 2 | 0.8:1 | 60°,3h | 0.66 | 60% | Ethyl acetate |
| 3 | 1.0:1 | 60°,3h | 0.74 | 80% | Ethyl acetate |
| 4 | 2.0:1 | 60°,3h | 0.92 | 85% | Ethyl acetate |
| 5 | 3.0:1 | 60°,3h | 1.03 | 82% | Ethyl acetate |
| 6 | 4.0:1 | 60°,3h | 1.25 | 67% | $H_2O$ |
| 7 | 5.0:1 | 60°,3h | 1.37 | 68% | $H_2O$ |
| 8 | 10.0:1 | 60°,3h | 1.77 | 84% | $H_2O$ |
| 9 | 12.0:1 | 60°,18h | 2.60 | 70% | $H_2O$ |

The degradation of starch during the reaction was examined by determination of the limiting viscosity of starch acetals with lower D.S. (Table 2). Some degradation was observed, but it was not drastic.

Table 2

| Limiting viscosity determined in DMSO/6M urea aqueous soln. (9:1) | | | |
|---|---|---|---|
| No. | D.S. | Reaction condition | Limiting viscosity |
| Starch | | | 237 |
| 1 | 0,32 | 0.0033M PTSA, 60°, 3h | 106 |
| 2 | 0.12 | 0.0033M PTSA, 60°, 3h | 122 |
| 3 | 0,47 | 0.0033M PTSA, 60°, 3h | 96 |
| r.t. = room temperature. | | | |

The starch acetal with a D.S. of 0.1 - 0.5 is water-soluble. When D.S. > 0.9, the material is insoluble in water. The product with a D.S.>2.4 is slightly soluble in dioxane. The water-insoluble starch acetal (0.9<D.S.<3.0) does not melt or decompose below 260°C.

The well-neutralized starch acetal is stable when stored. Desubstitution took place when the starch acetal was treated with a little bit of PTSA and stored. This acid sensitivity is advantageous in biodegradation.

The starch acetal with lower D.S. (0.1-0.5) was pressed together with some water to form a water-soluble disk. The water-unsoluble starch with a D.S. > 0.9 formed transparent disks with butyl L-lactate. No moulded article could be obtained without additive.

No cross-linking in the product was observed by 1H-NMR and IR-spectra. No cross-linking took place during the pressing of the sample at 150°C and 5 bar for 5 min.

The primary OH group at position 6 is less active than the secondary OH groups at position 2 and 3 in the glucose unit during this acetalization. As a result, formation of the starch acetal with a D.S. > 2.0 is very difficult, a large excess of acetonedimethylacetal and a long reaction time are needed. Due to the steric hindrance, formation of the starch acetal with a D.S. between 2.0 and 1.0 is not so easy as that of the product with a D.S. < 1.0.

Experiment 10-16: (Example 1-7) Preparation of 1-butyloxy-ethyloxy starch with a D.S. between 1.20 and 2.24 (Table 3)

A mixture of starch and DMSO (67 mg starch/1 ml DMSO) was heated at 120°C for 1h. To the cooled solution was added PTSA (0.0033 M) followed by adding BVE of the required molar quantity. The mixture was stirred at a desired temperature for a desired period, neutralized with DETA, and poured into water. The precipitate was washed thoroughly with water and then dialysed for 2 days. The product was dried under reduced pressure at 60°C for 3 days.

Table 3

| example 1-7 | | | | |
|---|---|---|---|---|
| Experiment | BVE/Starch | Reaction temperature & time | Degree of Substitution | Yield (based on starch) |
| 10 | 10.0:1 | r.t., 2h | 1.32 | 79% |
| 11 | 6.0:1 | r.t., 3h | 1.20 | 76% |
| 12 | 4.0:1 | 60°, 1h | 1.97 | 99% |
| 13 | 3.0:1 | 60°, 1h | 1.86 | 99% |
| 14 | 3.0:1 | 60°, 45 min. | 1.82 | 85% |
| 15 | 2.0:1 | 60°, 45 min. | 1.51 | 90% |
| 16 | 2.0:1 | 60°, 6h | 1.90 | 95% |

The materials with a D.S.>1.20 were insoluble in water and slightly soluble in DMSO. They formed a transparent disks by pressing at 140°C and 5 bar for 5 min. The products are stable in stored at room temperature. The Tg and Tpr. of some products are given in table 4.

Table 4

| Tg and Tpr of some products | | | | | |
|---|---|---|---|---|---|
| Tg(°C) (by DSC) | 63.5 | 67.8 | 70.5 | 90.1 | 94.0 |
| Tg(°C) (by DMTA) | | 63.3 | 69.3 | | |
| Tpr(°C) | 115 | 120 | 121 | 133 | 147 |
| D.S. | 1.97 | 1.86 | 1.82 | 1.51 | 1.40 |

Experiment 17 and 18: (Example 8 and 9) Preparation of 1-butyloxy-ethyloxy starch in a chamber-kneeder (Table 5)

Starch (10.0g), DMSO and PTSA (100 mg) were mixed at 80°C for 10 min. in a chamber-kneeder with a speed of

35 rotations/min. BVE (15.9 ml) was then added and the reaction was performed for a desired period. The mixture was neutralized by adding DETA, washed and dialysed for 2 days. The product was dried under reduced pressure at 60° for 3 days.

Table 5

| example 8 and 9 | | | | | |
|---|---|---|---|---|---|
| Experiment | DMSO | Time | D.S. | Tg(°C) | Conversion |
| 17 | 20.0 ml | 5 min. | 1.60 | 83 | 80% |
| 18 | 40.0 ml | 20 min. | 1.77 | 74 | 89% |

Experiment 19 and 20: (Example 10 and 11) Preparation of 1-butyloxy-ethyloxy starch in a mini-extruder (Table 6)

Starch (1.0 g), DMSO (2.0 ml) and PTSA (10 mg) were mixed at 80% in a mini-extruder with a speed of 100 rotations/min. for 2 min. BVE (1.6 ml, 2 eq.) was then added and the reaction was performed for a desired period. The mixture was neutralized by adding DETA; washed and dialysed for 2 days. The product was dried under reduced pressure at 60° for 3 days.

Table 6

| example 10 and 11 | | | |
|---|---|---|---|
| Experiment | Reaction time | D.S. | Conversion |
| 19 | 7 min. | 0.90 | 45% |
| 20 | 10 min. | 1.80 | 90% |

The sample of experiment 20 does not contain crosslinks, and has a Tg=70°C. The material could be compression moulded at 140°C.

Mechanical properties

Purified samples from experiment 13, 14 and 20, which were free of any low molecular weight additives, have been compression moulded into transparant, homogeneous test pieces of 14x11x2,4 mm.

These test pieces have been used in DMTA, 1Hz and a maximum strain of 4. Figures 1-3 show the results obtained for the samples from experiment 13. 14 and 20 respectively. The elastic modulus (E*) is represented on a logarithmic scale and the damping as tan $\delta$.

## Claims

1. Shaped article consisting essentially of a polysaccharide, obtained by moulding the polysaccharide in the absence of a plasticizing additive.

2. Shaped article according to claim 1 characterized in that the polysaccharide is a starch acetal in which part or all hydroxyl groups of the repeating units of the starch have been substituted by an acetalgroup having the formula

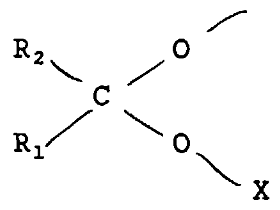

in which

X = alkyl, cycloalkyl, aryl or aralkyl
$R_1$ = H or alkyl
$R_2$ = alkyl
or $R_1 + R_2$ = cycloalkyl

the total number of carbon atoms in X, $R_1$ and $R_2$ being at least 4 and at most 50.

**3.** Shaped article according to claim 2 characterized in that X = alkyl.

**4.** Shaped article according to claim 2 characterized in that the average number of substituted hydroxyl groups per repeating unit is at least 0.05 and at most 3.0.

**5.** Shaped article according to claim 4 characterized in that the average number of substituted hydroxyl groups is at least 0.10 and at most 2.5.

**6.** Thermoplastic starch acetal in which part of or all hydroxyl groups of the repeating units of the starch molecule have been substituted by an acetal group having the formula:

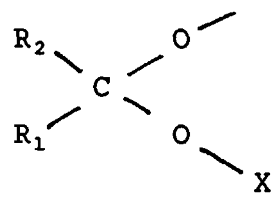

in which

X = alkyl, cycloalkyl, aryl or aralkyl
$R_1$ = H or alkyl
$R_2$= alkyl or $R_1$+$R_2$= cycloalkyl

the total number of carbon atoms in X, $R_1$ and $R_2$ being at least 4 and at most 50.

**7.** Thermoplastic starch acetal according to claim 6, characterized in that the average number of substituted hydroxyl groups per repating unit is at least 0.05 and at most 3.0.

**8.** Thermoplastic starch acetal according to claim 7 characterized in that the average number of substituted hydroxyl groups per repeating unit is at least 0.10 and at most 2.5.

**9.** Thermoplastic starch acetal according to claim 8 characterized in that the average number of substituted hydroxyl groups is at most 2.0.

**10.** Process for the preparation of thermoplastic starch acetals consisting essentially of:

A. Mixing

1. Starch
2. One or more compounds chosen from the group of

a. vinylethers having the formula

$$R_2\text{-CH=CH-OX}$$

b. acetals having the formula

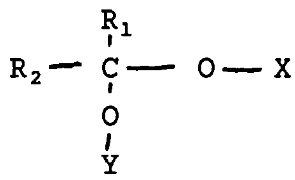

in which

X = alkyl, cycloalkyl, aryl or aralkyl
Y = H- or alkyl having 1-3 C-atoms
$R_1$ = H- or alkyl
$R_2$ = alkyl or $R_1$+$R_2$=cycloalkyl

the total number of carbon atoms in X, $R_1$ and $R_2$ being at least 4 and the number of carbon atoms in X being higher than in Y.

3. in the presence of an acid catalyst

B. Heating the mixture to a temperature sufficient for starting the reaction.
C. Removing the volatile compounds being present or being formed during the reaction.
D. Finishing the reaction by neutralizing the reaction mixture by an alkaline compound.
E. Removing the reaction mixture from the reactor and cooling to solidify.

**11.** Process according to claim 10, characterized in that the mixing (A) and heating (B) have been performed under shear and pressure.

**12.** Process according to claim 10 or 11, characterized in that the starch (1) is mixed with a plasticizing additive, which preferably is volatile at the temperature of the process.

**13.** Process according to anyone of the claims 10-12, characterized in that, after the reaction has progressed to such a degree to keep the reaction mixture plasticized at the process temperature in the absence of a plasticizing additive, the pressure in the reactor is decreased and the volatile compounds removed and the reaction completed.

**14.** Process according to claim 12, characterized in that the plasticizing additive is chosen from the group of water, and $C_2$ or $C_3$-glycol.

**15.** Process according to anyone of the claims 10-14, characterized in that the reactor contents are heated at a temperature of between 60 and 200°C.

**16.** Process according to anyone of the claims 10-15, characterized in that the reaction is realized in a plastification unit.

**17.** Process according to claim 16, characterized in that the plastification unit is an extruder.

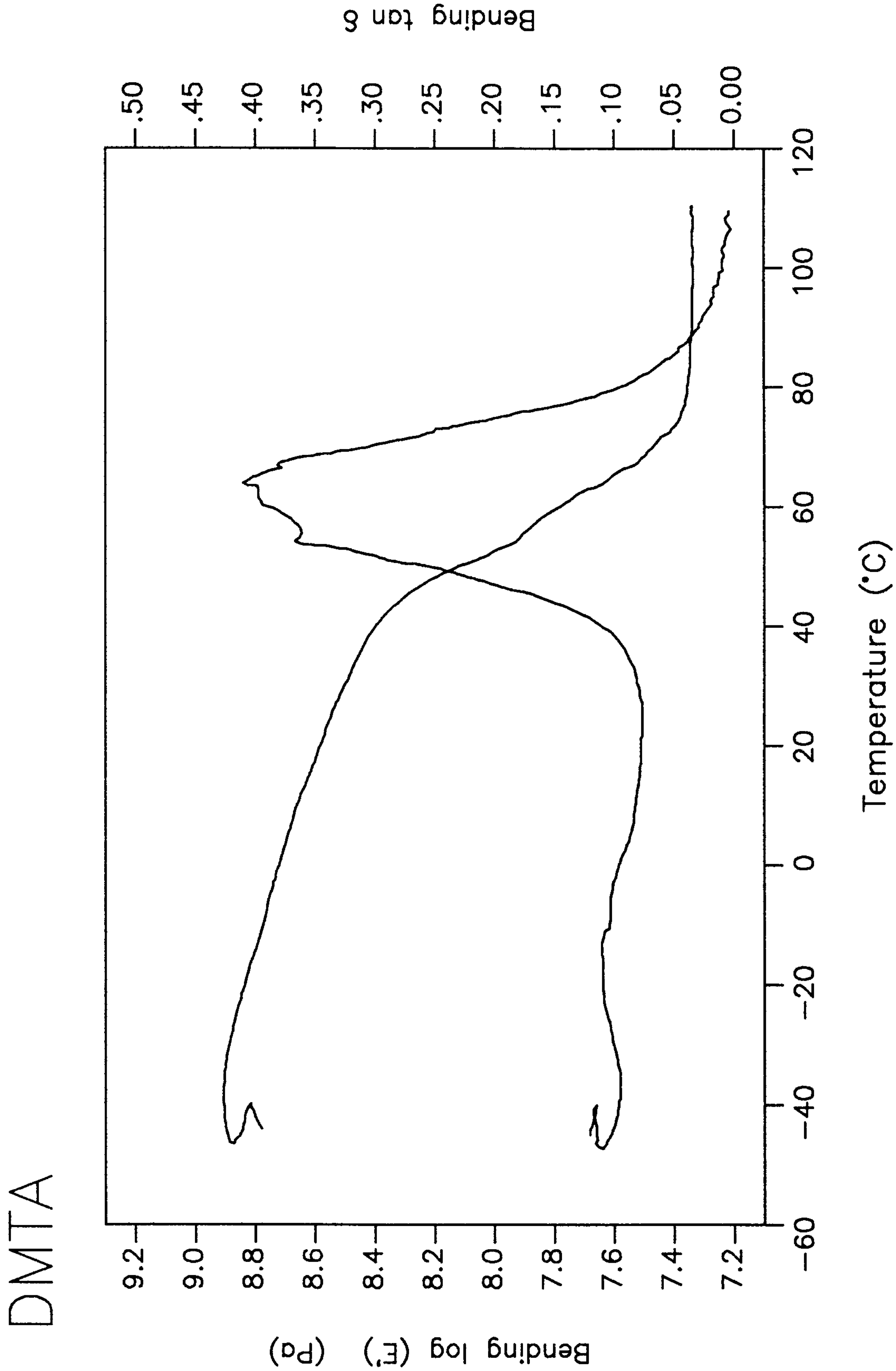
DMTA
Bending log (E') (Pa)
9.2
9.0
8.8
8.6
8.4
8.2
8.0
7.8
7.6
7.4
7.2
Bending tan δ
.50
.45
.40
.35
.30
.25
.20
.15
.10
.05
0.00
−60
−40
−20
0
20
40
60
80
100
120
Temperature (°C)

FIG.1

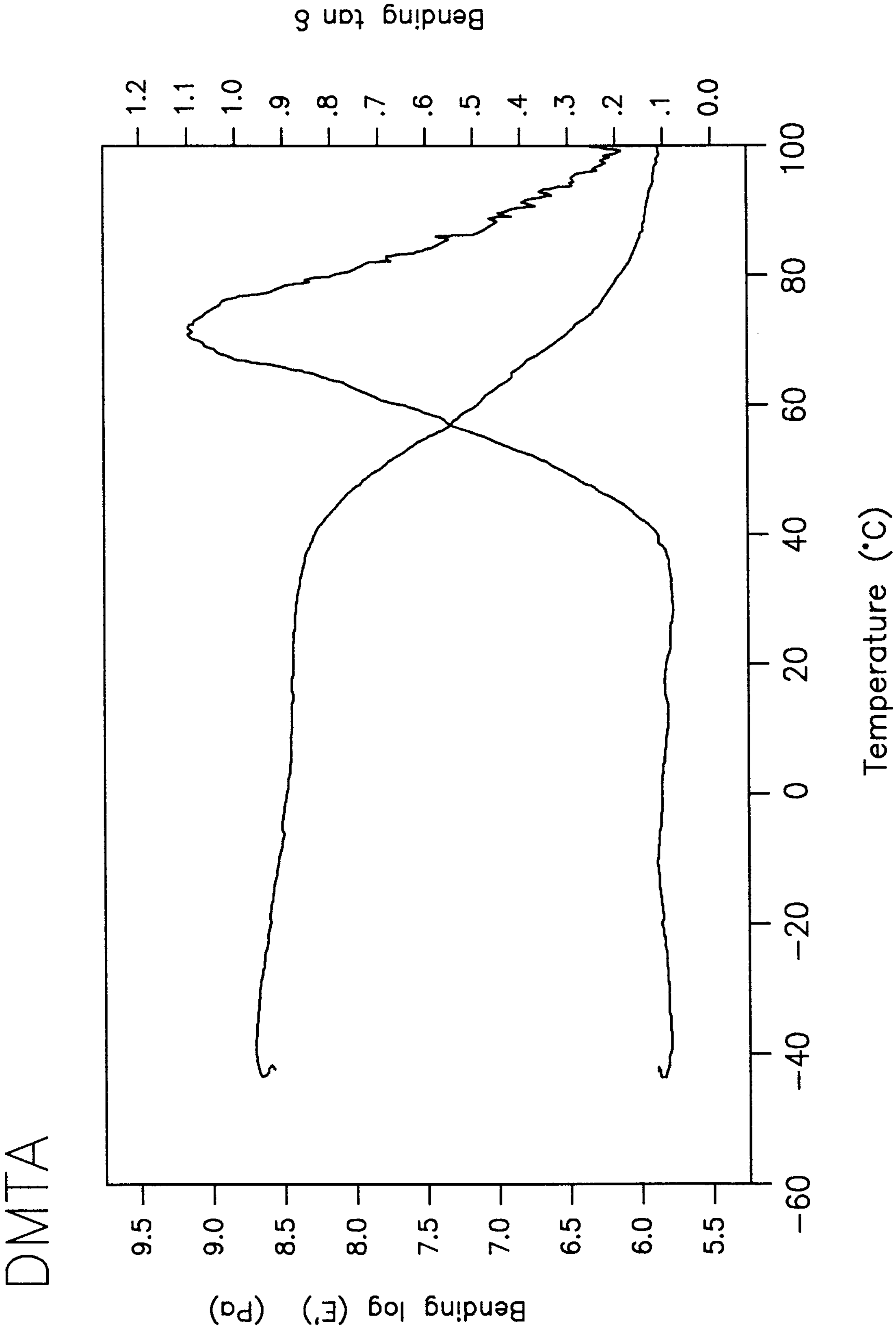
DMTA
Bending log (E') (Pa)
9.5
9.0
8.5
8.0
7.5
7.0
6.5
6.0
5.5
Bending tan δ
1.2
1.1
1.0
.9
.8
.7
.6
.5
.4
.3
.2
.1
0.0
−60
−40
−20
0
20
40
60
80
100
Temperature (°C)

FIG.2

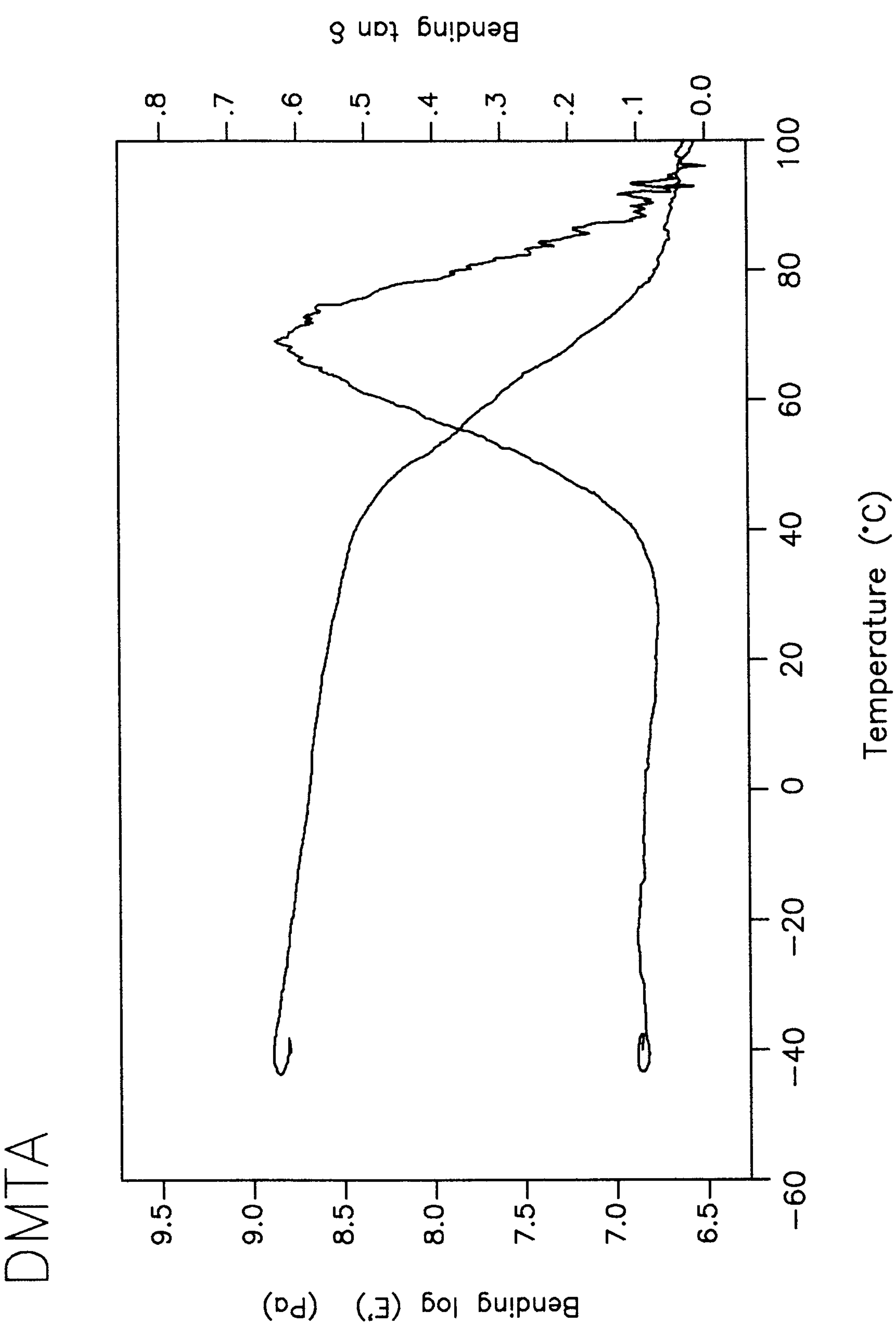
DMTA
Bending log (E') (Pa)
9.5
9.0
8.5
8.0
7.5
7.0
6.5
Bending tan δ
.8
.7
.6
.5
.4
.3
.2
.1
0.0
−60
−40
−20
0
20
40
60
80
100
Temperature (°C)

FIG.3

European Patent Office

# EUROPEAN SEARCH REPORT

Application Number
EP 96 20 2259

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-3 294 781 (MARY OLLIDENE WEAVER ET AL.)<br>* column 2, line 1-68 *<br>* example 9 * | 1-17 | C08B31/12<br>C08L3/08 |
| X | EP-A-0 474 173 (NIPPON GOHSEI)<br>* column 2, line 3-5 * | 1 | |
| A | US-A-3 309 360 (LUCIANO NOBILE ET AL.) | | |
| A | STARKE,<br>vol. 18, no. 5, 1966, WEINHEIM DE,<br>pages 131-135, XP002022300<br>M.L.WOLFROM ET AL.: "Starch Acetals" | | |

TECHNICAL FIELDS SEARCHED (Int.Cl.6)
C08B
C08L

The present search report has been drawn up for all claims

| Place of search | Date of completion of the search | Examiner |
|---|---|---|
| THE HAGUE | 8 January 1997 | Lensen, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)